# EUROPEAN PATENT APPLICATION

(11) **EP 4 692 679 A1**
(43) Date of publication of application: **11.02.2026**
(21) Application number: 24778996.9
(22) Date of filing: 28.02.2024
(51) Int. Cl.: F25B 21/00

(54) **MAGNETIC REFRIGERATION SYSTEM AND EQUIPMENT**

(30) Priority: 30.03.2023 JP 2023056205
(71) Applicant: KAWASAKI JUKOGYO KABUSHIKI KAISHA, Kobe-shi, Hyogo 650-8670 (JP)
(72) Inventor: KARIYA, Daisuke, Hyogo 650-8670 (JP); OKAMOTO, Shirohiko, Hyogo, 650-8670 (JP)
(74) Representative: Arnold & Siedsma
(86) International application number: PCT/JP2024/007287
(87) International publication number: WO 2024/202856

(57) **Abstract**

A magnetic refrigeration system includes: a magnetic refrigerator including a working vessel that is filled with a process fluid in liquid form, a magnetic working material that is located in the working vessel, and a magnet that is located outside the working vessel and that enables magnetization and demagnetization of the magnetic working material; a feed line through which the process fluid in liquid form is supplied to the working vessel; a cold discharge line through which the process fluid discharged from the working vessel flows; and a hot discharge line through which the process fluid discharged from the working vessel flows. The magnetic refrigeration system: causes, by adiabatic magnetization, the magnetic working material to generate heat; supplies the process fluid from the feed line to the working vessel, and discharges the process fluid whose temperature has increased due to the heat generated by the magnetic working material to the hot discharge line; causes, by adiabatic demagnetization, the magnetic working material to absorb heat; and supplies the process fluid from the feed line to the working vessel, and discharges the process fluid whose temperature has decreased as a result of heat of the process fluid being absorbed by the magnetic working material to the cold discharge line.

## Description

### Technical Field

The present disclosure relates to a magnetic refrigeration system including a magnetic refrigerator, and also to a facility including the magnetic refrigeration system.

### Background Art

Conventionally, there is a known magnetic refrigerator that cools a target object by utilizing the magnetocaloric effect, in which the temperature of a magnetic material changes reversibly as a result of repeated magnetization and demagnetization. Such a magnetic refrigerator is used for cooling and thereby liquefying low-temperature gas. Patent Literature 1 discloses a boil off gas reliquefaction system including a magnetic refrigerator of this type.

The boil off gas reliquefaction system disclosed in Patent Literature 1 includes a magnetic refrigerator and a refrigerator. The magnetic refrigerator includes: a magnetic field generator that enables magnetization and demagnetization; a hot end where heat is accumulated as a result of an increase in the temperature of a magnetic working material; and a cold end where cold energy is accumulated as a result of a decrease in the temperature of the magnetic working material. The magnetic refrigerator liquefies, at the cold end, boil off gas that has been generated in a storage tank of low-temperature liquefied gas. The refrigerator circulates a refrigerant at the hot end of the magnetic refrigerator to absorb the heat accumulated at the hot end. In the magnetic refrigerator, heat transfer between the magnetic working material and the hot end, and heat transfer between the magnetic working material and the cold end, are controlled by a heat switch.

### Citation List

### Patent Literature

PTL 1: Japanese Laid-Open Patent Application Publication No. 2016-234582

### Summary of Invention

### Technical Problem

In the magnetic refrigerator of Patent Literature 1, at the hot end, heat is accumulated by a heat transfer medium that has collected the heat released by the magnetic working material, whereas at the cold end, cold energy is accumulated by the heat transfer medium that has been cooled as a result of the heat of the heat transfer medium being absorbed by the magnetic working material. The cold end at which the cold energy is accumulated and the boil off gas exchange heat with each other. As a result, the boil off gas is cooled and liquefied. In the magnetic refrigerator, since the gas is the cooling target, there is room for improvement in terms of increasing cooling efficiency.

The present disclosure has been made in view of the above, and an object of the present disclosure is to, in a magnetic refrigeration system including a magnetic refrigerator, increase the efficiency in cooling a cooling target and achieve a reduction in the size of the magnetic refrigerator.

### Solution to Problem

In order to solve the above-described problems, a magnetic refrigeration system according to one aspect of the present disclosure includes: a magnetic refrigerator including a working vessel that is filled with a process fluid in liquid form, a magnetic working material that is located in the working vessel, and a magnet that is located outside the working vessel and that enables magnetization and demagnetization of the magnetic working material; at least one feed line that is connected to the working vessel of the magnetic refrigerator and through which the process fluid in liquid form is supplied to the working vessel; a cold discharge line that is connected to the working vessel of the magnetic refrigerator and through which the process fluid discharged from the working vessel flows; and a hot discharge line that is connected to the working vessel of the magnetic refrigerator and through which the process fluid discharged from the working vessel flows. The magnetic refrigeration system: causes, by adiabatic magnetization, the magnetic working material to generate heat; supplies the process fluid from the feed line to the working vessel, and discharges the process fluid whose temperature has increased due to the heat generated by the magnetic working material to the hot discharge line; causes, by adiabatic demagnetization, the magnetic working material to absorb heat; and supplies the process fluid from the feed line to the working vessel, and discharges the process fluid whose temperature has decreased as a result of heat of the process fluid being absorbed by the magnetic working material to the cold discharge line.

A facility according to the present disclosure includes the above-described magnetic refrigeration system.

### Advantageous Effects of Invention

The present disclosure makes it possible to, in a magnetic refrigeration system including a magnetic refrigerator, increase the efficiency in cooling a cooling target and achieve a reduction in the size of the magnetic refrigerator.

### Brief Description of Drawings

FIG. 1 shows a schematic configuration of a magnetic refrigeration system according to the present disclosure.
FIG. 2 shows a schematic configuration of a liquefaction facility to which the magnetic refrigeration system is applied.
FIG. 3 shows a schematic configuration of a low-temperature liquid storage facility to which the magnetic refrigeration system is applied.
FIG. 4 shows a schematic configuration of a liquid supply facility to which the magnetic refrigeration system is applied.

### Description of Embodiments

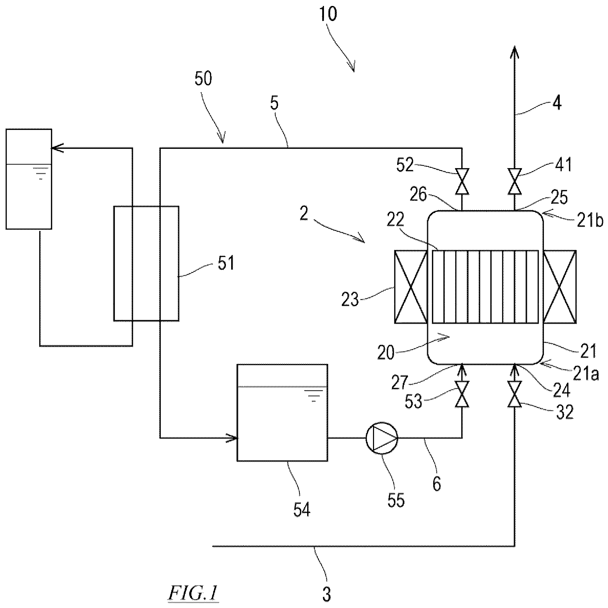

Next, an embodiment of the present disclosure is described with reference to the drawings. FIG. 1 shows a schematic configuration of a magnetic refrigeration system 10 according to the present disclosure.

### <<Configuration of Magnetic Refrigeration System 10>>

The magnetic refrigeration system 10 shown in FIG. 1 includes: a magnetic refrigerator 2; a first feed line 3, through which a process fluid is supplied to the magnetic refrigerator 2, the process fluid being a cooling target; a cold discharge line 4, through which the process fluid is discharged from the magnetic refrigerator 2; a hot discharge line 5, through which heat is discharged from the magnetic refrigerator 2; and a second feed line 6, through which the process fluid discharged from the magnetic refrigerator 2 is supplied to the magnetic refrigerator 2.

### <Magnetic Refrigerator 2>

The magnetic refrigerator 2 includes: a working vessel 21; a magnetic working material 22 located in the working vessel 21; and a magnet 23 located outside the working vessel 21.

The working vessel 21 includes a refrigeration working chamber 20, the interior of which is filled with the process fluid. The working vessel 21 includes a first end 21a and a second end 21b. The second end 21b is located away from the first end 21a. On the first end 21a of the working vessel 21, an inlet 24 and a return inlet 27 are located, each of which is an inlet for the process fluid. On the second end 21b of the working vessel 21, a cold outlet 25 and a hot outlet 26 are located, each of which is an outlet for the process fluid. In the refrigeration working chamber 20, the process fluid flows from the first end 21a toward the second end 21b.

The magnetic working material 22 is a magnetic material called a magnetocaloric material. The magnetic working material 22 is located in the working vessel 21 between the first end 21a and the second end 21b. That is, the magnetic working material 22 is located within a flow of the process fluid in the working vessel 21. The magnetic working material 22 includes passages for the process fluid. The form of the magnetic working material 22 is not particularly limited. For example, the magnetic working material 22 is made up of a large number of particles accommodated in a container, and includes passages between the particles, which allow the process fluid to pass through.

The magnet 23 is a magnet to form a magnetic field on the magnetic working material 22, and enables switching between magnetization and demagnetization of the magnetic working material 22. For example, the magnet 23 is a permanent magnet, and moving the magnet 23 relative to the magnetic working material 22 enables switching between magnetization and demagnetization of the magnetic working material 22. As another example, the magnet 23 is an electromagnet, and switching between magnetization and demagnetization of the magnetic working material 22 is enabled by supplying or not supplying an electric current to the electromagnet.

### <First Feed Line 3>

The first feed line 3 is connected to the inlet 24 of the working vessel 21 of the magnetic refrigerator 2. The first feed line 3 is configured using piping or the like. The process fluid that flows through the first feed line 3 is in liquid form. However, the process fluid flowing through the first feed line 3 is not strictly limited to liquid form. Alternatively, the process fluid may be a liquid in which a small number of gas bubbles are present, i.e., may be in a gas-liquid two-phase state. A feed valve 32 is located on the first feed line 3. The feed valve 32 is an on-off valve or a flow regulating valve, and the feed valve 32 switches between allowing and blocking communication between the first feed line 3 and the working vessel 21. When the feed valve 32 is opened, the process fluid is supplied from the first feed line 3 to the magnetic refrigerator 2, whereas when the feed valve 32 is closed, the supply of the process fluid from the first feed line 3 to the magnetic refrigerator 2 is blocked.

### <Cold Discharge Line 4>

The cold discharge line 4 is connected to the cold outlet 25 of the working vessel 21 of the magnetic refrigerator 2. The cold discharge line 4 is configured using piping or the like. During steady-state operation, the process fluid whose temperature is lower than the temperature of the process fluid that flows into the working vessel 21, i.e., the process fluid that has been cooled in the working vessel 21, is discharged to the cold discharge line 4. A cold discharge valve 41 is located on the cold discharge line 4. The cold discharge valve 41 is an on-off valve or a flow regulating valve, and the cold discharge valve 41 switches between allowing and blocking communication between the working vessel 21 and the cold discharge line 4. When the cold discharge valve 41 is opened, the process fluid is discharged from the working vessel 21 to the cold discharge line 4, whereas when the cold discharge valve 41 is closed, the discharge of the process fluid from the working vessel 21 to the cold discharge line 4 is blocked.

### <Hot Discharge Line 5>

The hot discharge line 5 is connected to the hot outlet 26 of the working vessel 21 of the magnetic refrigerator 2. The hot discharge line 5 is configured using piping or the like. During steady-state operation, the process fluid whose temperature is higher than the temperature of the process fluid that flows into the working vessel 21, i.e., the process fluid whose temperature has been increased in the working vessel 21, is discharged to the hot discharge line 5. A hot discharge valve 52 is located on the hot discharge line 5. The hot discharge valve 52 is an on-off valve or a flow regulating valve, and the hot discharge valve 52 switches between allowing or blocking communication between the working vessel 21 and the hot discharge line 5. When the hot discharge valve 52 is opened, the process fluid is discharged from the working vessel 21 to the hot discharge line 5, whereas when the hot discharge valve 52 is closed, the discharge of the process fluid from the working vessel 21 to the hot discharge line 5 is blocked.

A cooler 51 is located on the hot discharge line 5 at a position downstream of the hot discharge valve 52. The cooler 51 cools the process fluid flowing through the hot discharge line 5 by heat exchange between the process fluid and a refrigerant. The process fluid that has been cooled by the cooler 51 is fed to and stored in a buffer tank 54.

### <Second Feed Line 6>

The second feed line 6 connects between the buffer tank 54 and the return inlet 27 of the working vessel 21. The second feed line 6 is configured using piping or the like. The process fluid in liquid form stored in the buffer tank 54 is returned to the refrigeration working chamber 20 in the working vessel 21 through the second feed line 6. The working vessel 21, the hot discharge line 5, and the second feed line 6 form a circulatory passage 50 for the process fluid.

A pump 55 is located on the second feed line 6. The pump 55 increases the pressure of the process fluid stored in the buffer tank 54, and then feeds the process fluid to the working vessel 21. A return valve 53 is located on the second feed line 6 at a position downstream of the pump 55. The return valve 53 is an on-off valve or a flow regulating valve, and the return valve 53 switches between allowing and blocking communication between the second feed line 6 and the working vessel 21. When the return valve 53 is opened, the process fluid is supplied from the second feed line 6 to the magnetic refrigerator 2, whereas when the return valve 53 is closed, the supply of the process fluid from the second feed line 6 to the magnetic refrigerator 2 is blocked.

### <<Method of Operating Magnetic Refrigeration System 10>>

Hereinafter, a method of operating the magnetic refrigeration system 10 configured as above is described. Before steady-state operation, the magnetic refrigeration system 10 performs initial cooling of the magnetic refrigerator 2. In the initial cooling of the magnetic refrigerator 2, a magnetic refrigeration cycle including (a) an adiabatic magnetization step, (b) a heat-discharging magnetization step, (c) an adiabatic demagnetization step, and (d') an initial heat-absorbing demagnetization step is performed at least once, and thereby cold energy is accumulated until a predetermined initial temperature is reached. The initial temperature is an arbitrary temperature that is lower than a target cooling temperature for the process fluid. Below-described operations of the feed valve 32, the cold discharge valve 41, the hot discharge valve 52, the return valve 53, and the pump 55 may be controlled by control circuitry, or may be manually performed by an operator.

### (a) Adiabatic Magnetization Step

The refrigeration working chamber 20 is filled with the process fluid in advance. In a state where the feed valve 32, the cold discharge valve 41, the hot discharge valve 52, and the return valve 53 are closed, a magnetic field is externally applied to the magnetic working material 22 by the magnet 23. In this manner, the magnetic working material 22 is magnetized in an adiabatic state, and consequently generates heat.

### (b) Heat-Discharging Magnetization Step

From the adiabatic magnetization step, the magnetic working material 22 is continuously magnetized, and the pump 55 is operated in a state where the feed valve 32 and the cold discharge valve 41 are closed and the hot discharge valve 52 and the return valve 53 are opened. As a result of the pump 55 being operated, the process fluid in liquid form stored in the buffer tank 54 is supplied to the working vessel 21 through the second feed line 6. In the working vessel 21, the magnetic working material 22 and the process fluid exchange heat with each other, and the magnetic working material 22 releases heat to the process fluid. The process fluid whose temperature has increased due to the heat is discharged from the hot outlet 26 to the hot discharge line 5.

### (c) Adiabatic Demagnetization Step

In a state where the feed valve 32, the cold discharge valve 41, the hot discharge valve 52, and the return valve 53 are closed, the intensity of the magnetic field applied to the magnetic working material 22 by the magnet 23 is reduced. In this manner, the magnet 23 is demagnetized in an adiabatic state, and consequently absorbs heat from the surroundings.

### (d') Initial Heat-Absorbing Demagnetization Step

From the adiabatic demagnetization step, the magnetic working material 22 is continuously demagnetized, and the pump 55 is operated in a state where the feed valve 32 and the cold discharge valve 41 are closed and the hot discharge valve 52 and the return valve 53 are opened. As a result of the pump 55 being operated, the process fluid in liquid form stored in the buffer tank 54 is supplied to the working vessel 21 through the second feed line 6. In the working vessel 21, the magnetic working material 22 and the process fluid exchange heat with each other, and the magnetic working material 22 absorbs heat from the process fluid. The process fluid whose temperature has decreased as a result of the heat of the process fluid being absorbed by the magnetic working material 22 is discharged from the hot outlet 26 to the hot discharge line 5.

When the initial cooling of the magnetic refrigerator 2 has ended, the magnetic refrigeration system 10 starts steady-state operation. During the steady-state operation, the magnetic refrigeration system 10 performs a magnetic refrigeration cycle including (a) the adiabatic magnetization step, (b) the heat-discharging magnetization step, (c) the adiabatic demagnetization step, and (d) a heat-absorbing demagnetization step, thereby further decreasing the temperature of the process fluid in liquid form that has been supplied from the first feed line 3 and then discharging the process fluid to the cold discharge line 4. The only difference between the magnetic refrigeration cycle during the steady-state operation and the magnetic refrigeration cycle during the initial cooling lies in (d) the heat-absorbing demagnetization step. Therefore, hereinafter, (d) the heat-absorbing demagnetization step will be described in detail, and the detailed description of the other steps will be omitted below.

### (d) Heat-Absorbing Demagnetization Step

In a state where the magnetic working material 22 is demagnetized continuously from the adiabatic demagnetization step, the hot discharge valve 52 and the return valve 53 are closed, and the feed valve 32 and the cold discharge valve 41 are opened. The process fluid is supplied to the working vessel 21 through the first feed line 3. In the working vessel 21, the magnetic working material 22 and the process fluid exchange heat with each other, and the magnetic working material 22 absorbs heat from the process fluid. The process fluid whose temperature has decreased as a result of the heat of the process fluid being absorbed by the magnetic working material 22 is discharged from the cold outlet 25 to the cold discharge line 4.

In the above-described method of operating the magnetic refrigeration system 10, in the magnetic refrigeration cycle of the initial cooling, the process fluid is circulated in the circulatory passage that is formed by the hot discharge line 5, the second feed line 6, and the working vessel 21. However, also in the initial heat-absorbing demagnetization step of the magnetic refrigeration cycle of the initial cooling, similar to the heat-absorbing demagnetization step during the steady-state operation, the process fluid may be supplied from the first feed line 3 to the working vessel 21, and the process fluid whose temperature has decreased may be discharged from the cold outlet 25. Alternatively, the process fluid may be supplied from the first feed line 3 to the working vessel 21, and the process fluid whose temperature has decreased may be discharged from the hot outlet 26.

### <<Application Examples of Magnetic Refrigeration System 10>>

With the above magnetic refrigeration system 10, the temperature of the process fluid in liquid form is decreased to a temperature that is higher than the melting point and lower than the boiling point of the process fluid in a pressurized environment. With the magnetic refrigeration system 10, the temperature of the process fluid in liquid form may be decreased to bring the process fluid into a supercooled state. Such a magnetic refrigeration system 10 can be used, for example, in a facility storing a low-temperature liquid to further decrease the temperature of the low-temperature liquid. Hereinafter, an example in which the above-described magnetic refrigeration system 10 is applied to a facility storing a low-temperature liquid is described.

### <Application Example 1>

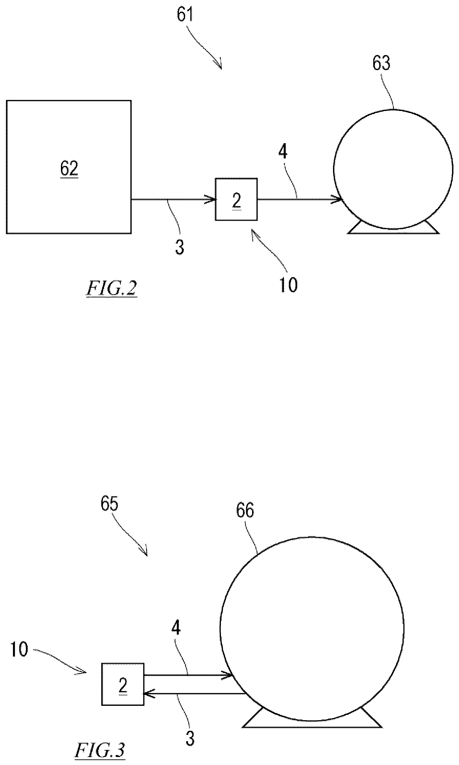

FIG. 2 shows a schematic configuration of a liquefaction facility 61, to which the magnetic refrigeration system 10 is applied. The liquefaction facility 61 shown in FIG. 2 includes a liquefier 62, a tank 63, and the magnetic refrigeration system 10. The liquefier 62 generates liquefied gas by cooling gas. The gas to be liquefied is, for example, natural gas or hydrogen. The first feed line 3 of the magnetic refrigeration system 10 is connected to the liquefier 62. The liquefied gas that has flowed into the first feed line 3 from the liquefier 62 and that serves as the process fluid is supplied to the magnetic refrigerator 2 through the first feed line 3. The liquefied gas supplied to the magnetic refrigerator 2 is cooled by the magnetic refrigerator 2. The cold discharge line 4 of the magnetic refrigeration system 10 is connected to the tank 63. The liquefied gas that has flowed out of the magnetic refrigerator 2 into the cold discharge line 4 is fed to the tank 63 through the cold discharge line 4. In the liquefaction facility 61, a refrigerant to cool the gas in the liquefaction facility 61 can be used as a cooling source for the cooler 51 included in the magnetic refrigeration system 10.

### <Application Example 2>

FIG. 3 shows a schematic configuration of a low-temperature liquid storage facility 65, to which the magnetic refrigeration system 10 is applied. The low-temperature liquid storage facility 65 shown in FIG. 3 includes a tank 66 and the magnetic refrigeration system 10. The tank 66 stores therein a low-temperature liquid or a cryogenic liquid. Examples of such a liquid include LNG and liquefied hydrogen. The first feed line 3 of the magnetic refrigeration system 10 is connected to a liquid-phase part of the tank 66. The low-temperature liquid that has flowed from the tank 66 into the first feed line 3 is supplied to the magnetic refrigerator 2 through the first feed line 3. The low-temperature liquid that has been supplied to the magnetic refrigerator 2 is cooled by the magnetic refrigerator 2. The cold discharge line 4 of the magnetic refrigeration system 10 is connected to the liquid-phase part of the tank 66. The low-temperature liquid that has flowed out of the magnetic refrigerator 2 into the cold discharge line 4 is returned to the tank 66 through the cold discharge line 4. In the low-temperature liquid storage facility 65, the low-temperature liquid stored in the tank 66 may be used as a cooling source for the cooler 51 included in the magnetic refrigeration system 10. Thus, since the low-temperature liquid storage facility 65 includes the magnetic refrigeration system 10, the temperature of the low-temperature liquid stored in the low-temperature liquid storage facility 65 is suppressed from increasing, and consequently, the generation of boil off gas is suppressed.

### <Application Example 3>

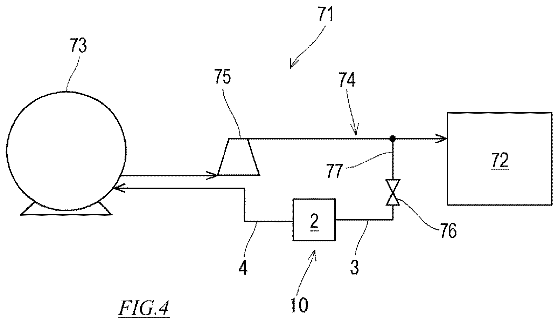

FIG. 4 shows a schematic configuration of a liquid supply facility 71, to which the magnetic refrigeration system 10 is applied. The liquid supply facility 71 shown in FIG. 4 is a facility to supply a low-temperature liquid to consumption equipment 72, which consumes the liquid and which is, for example, a combustor to combust a liquid fuel. The liquid supply facility 71 includes a tank 73, a liquid supply line 74, a return line 77, and the magnetic refrigeration system 10. The tank 73 stores the liquid therein. The tank 73 and the consumption equipment 72 are connected to each other by the liquid supply line 74. The liquid in the tank 73 is fed to the consumption equipment 72 through the liquid supply line 74. A booster 75 is located on the liquid supply line 74. The booster 75 increases the pressure of the liquid supplied to the consumption equipment 72. As the booster 75, a compressor that increases the pressure of the liquid by compression, or a heater that increases the pressure of the liquid by heating, may be used. The return line 77 is connected to the liquid supply line 74 at a position downstream of the booster 75. An excess amount of the liquid flowing through the liquid supply line 74 flows into the return line 77. A flow regulating valve 76 is located on the return line 77, and the flow rate of the liquid that flows from the liquid supply line 74 into the return line 77 is adjusted by the flow regulating valve 76. The temperature of the liquid that has flowed into the return line 77 is higher than the temperature of the liquid stored in the tank 73. The first feed line 3 of the magnetic refrigeration system 10 is connected to the return line 77. The liquid that has flowed from the return line 77 into the first feed line 3 is supplied to the magnetic refrigerator 2 through the first feed line 3. The liquid that has been supplied to the magnetic refrigerator 2 is cooled by the magnetic refrigerator 2. The cold discharge line 4 of the magnetic refrigeration system 10 is connected to the liquid-phase part of the tank 73, and the liquid that has flowed out of the magnetic refrigerator 2 into the cold discharge line 4 is returned to the tank 73 through the cold discharge line 4. In the liquid supply facility 71, the liquid stored in the tank 73 may be used as a cooling source for the cooler 51 included in the magnetic refrigeration system 10. Since the liquid supply facility 71 includes the magnetic refrigeration system 10, the liquid taken out of the tank 73 can be cooled to the temperature of the liquid stored in the tank 73 or to an even lower temperature than that by the magnetic refrigeration system 10, and then returned to the tank 73. Accordingly, the temperature of the liquid stored in the tank 73 is suppressed from increasing, and consequently, the generation of boil off gas is suppressed. The above-described liquid supply facility 71 may be a facility to supply the liquid from the tank 73 to a storage container that stores the liquid therein. In this case, the configuration of the liquid supply facility 71 is described by replacing the consumption equipment 72 in the above description with the storage container.

Application Examples 1 to 3 of the magnetic refrigeration system 10 are as described above. Among Application Examples 1 to 3, two of them or all of them may be combined together.

### [Summary]

A magnetic refrigeration system 10 according to item 1 of the present disclosure includes: a magnetic refrigerator 2 including a working vessel 21, which is filled with a process fluid in liquid form, a magnetic working material 22, which is located in the working vessel 21, and a magnet 23, which is located outside the working vessel 21 and which enables magnetization and demagnetization of the magnetic working material 22; at least one feed line selected from feed lines 3 and 6, which is connected to the working vessel 21 of the magnetic refrigerator 2 and through which the process fluid in liquid form is supplied to the working vessel 21; a cold discharge line 4, which is connected to the working vessel 21 of the magnetic refrigerator 2 and through which the process fluid discharged from the working vessel 21 flows; and a hot discharge line 5, which is connected to the working vessel 21 of the magnetic refrigerator 2 and through which the process fluid discharged from the working vessel 21 flows. The magnetic refrigeration system 10: causes, by adiabatic magnetization, the magnetic working material 22 to generate heat; supplies the process fluid from the feed line 6 to the working vessel 21, and discharges the process fluid whose temperature has increased due to the heat generated by the magnetic working material 22 to the hot discharge line 5; causes, by adiabatic demagnetization, the magnetic working material 22 to absorb heat; and supplies the process fluid from the feed line 3 to the working vessel 21, and discharges the process fluid whose temperature has decreased as a result of heat of the process fluid being absorbed by the magnetic working material 22 to the cold discharge line 4.

In the magnetic refrigeration system 10 configured as described above, the process fluid that flows into the magnetic refrigerator 2, the process fluid that flows out of the magnetic refrigerator 2 and whose temperature has increased, and the process fluid that flows out of the magnetic refrigerator 2 and whose temperature has decreased are each in liquid form. Such a magnetic refrigerator 2 has higher heat exchange efficiency and can cool the process fluid more efficiently than a conventional magnetic refrigerator that causes a process fluid in liquid form and the magnetic working material 22 to exchange heat with each other. In addition, in the magnetic refrigeration system 10 configured as described above, the process fluid that is the same as the cooling target is used as a medium to transfer heat from the magnetic working material 22. Accordingly, in the working vessel 21, the same passages can be shared by the medium to transfer heat and the cooling target. This makes it possible to reduce the size of the working vessel 21. Since the working vessel 21 can be reduced in size, the magnetic refrigeration system 10 can be reduced in size.

The magnetic refrigeration system 10 according to item 2 of the present disclosure is configured such that, in the magnetic refrigeration system 10 according to item 1, the hot discharge line 5 includes: a cooler 51, which cools the process fluid; and a buffer tank 54, which stores the process fluid that has been cooled by the cooler 51, and the at least one feed line selected from the feed lines 3 and 6 includes the feed line 6, through which the process fluid stored in the buffer tank 54 is supplied.

In the magnetic refrigeration system 10 configured as described above, the process fluid is used as a medium to transfer heat from the magnetic working material 22, and the process medium is circulated for reuse.

The magnetic refrigeration system 10 according to item 3 of the present disclosure is configured such that, in the magnetic refrigeration system 10 according to item 1 or 2, in the working vessel 21 of the magnetic refrigerator 2, the magnetic working material 22 and the process fluid come into direct contact with each other and exchange heat with each other.

In the magnetic refrigeration system 10 configured as described above, the magnetic working material 22 and the process fluid directly exchange heat with each other. Therefore, the efficiency in the heat exchange between the magnetic working material 22 and the process fluid can be increased compared to a case where the magnetic working material 22 and the process fluid indirectly exchanges heat with each other via a medium.

A facility according to item 4 of the present disclosure (i.e., a liquefaction facility 61) includes: a liquefier 62, which generates liquefied gas by cooling and liquefying gas; a tank 63, which stores the liquefied gas; and the magnetic refrigeration system 10 according to any one of items 1 to 3, the magnetic refrigeration system 10 including: the feed line 3, which is connected to the liquefier 62; the cold discharge line 4, which is connected to the tank 63; and the magnetic refrigerator 2, which cools, as the process fluid, the liquefied gas generated by the liquefier 62.

In the facility 61 configured as described above, since the liquefied gas that has been cooled by the magnetic refrigeration system 10 is supplied to the tank 63, the temperature of the liquefied gas in the tank 63 is suppressed from increasing, and consequently, vaporization of the liquefied gas in the tank 63 can be suppressed.

A facility according to item 5 of the present disclosure (i.e., a low-temperature liquid storage facility 65) includes: a tank 66, which stores a liquid; and the magnetic refrigeration system 10 according to any one of items 1 to 3, the magnetic refrigeration system 10 including: the feed line 3, which is connected to the tank 66; the cold discharge line 4, which is connected to the tank 66; and the magnetic refrigerator 2, which cools, as the process fluid, the liquid that has flowed from the tank 66 into the feed line 3.

In the facility 65 configured as described above, the temperature of the liquid stored in the tank 66 is suppressed from increasing, and consequently, the generation of boil off gas from the liquid is suppressed in the tank 66.

A facility according to item 6 of the present disclosure (i.e., a liquid supply facility 71) includes: a tank 73, which stores a liquid; a liquid supply line 74, which is connected to the tank 73 and through which the liquid is supplied to a storage container or to consumption equipment 72, wherein the storage container stores the liquid therein and the consumption equipment 72 consumes the liquid; a booster 75, which is located on the liquid supply line 74 and which increases a pressure of the liquid; a return line 77, which is connected to the liquid supply line 74 at a position downstream of the booster 75; and the magnetic refrigeration system 10 according to any one of items 1 to 3, the magnetic refrigeration system 10 including: the feed line 3, which is connected to the return line 77; the cold discharge line 4, which is connected to the tank 73; and the magnetic refrigerator 2, which cools, as the process fluid, the liquid that has flowed from the return line 77 into the feed line 3.

In the facility 71 configured as described above, an increase in the temperature of the liquid stored in the tank 73 due to the returning of the liquid to the tank 73 is suppressed, and consequently, the generation of boil off gas from the liquid is suppressed in the tank 73.

The present disclosure has been discussed as above for the purpose of presenting examples and explanations, and the above discussion has no intention to limit the present disclosure to the modes disclosed herein. For example, in the above detailed description, various features of the present disclosure are grouped together in one embodiment for the purpose of streamlining the present disclosure. However, some of the features therein may be combined together. Further, the features included in the present disclosure may be combined with alternative embodiments, alternative configurations, or alternatively modes, other than those described above.

## Claims

1. A magnetic refrigeration system comprising:
a magnetic refrigerator including a working vessel that is filled with a process fluid in liquid form, a magnetic working material that is located in the working vessel, and a magnet that is located outside the working vessel and that enables magnetization and demagnetization of the magnetic working material;
at least one feed line that is connected to the working vessel of the magnetic refrigerator and through which the process fluid in liquid form is supplied to the working vessel;
a cold discharge line that is connected to the working vessel of the magnetic refrigerator and through which the process fluid discharged from the working vessel flows; and
a hot discharge line that is connected to the working vessel of the magnetic refrigerator and through which the process fluid discharged from the working vessel flows,
wherein
the magnetic refrigeration system:
causes, by adiabatic magnetization, the magnetic working material to generate heat;
supplies the process fluid from the feed line to the working vessel, and discharges the process fluid whose temperature has increased due to the heat generated by the magnetic working material to the hot discharge line;
causes, by adiabatic demagnetization, the magnetic working material to absorb heat; and
supplies the process fluid from the feed line to the working vessel, and discharges the process fluid whose temperature has decreased as a result of heat of the process fluid being absorbed by the magnetic working material to the cold discharge line.

2. The magnetic refrigeration system according to claim 1, wherein
the hot discharge line includes:
a cooler that cools the process fluid; and
a buffer tank that stores the process fluid that has been cooled by the cooler, and
the at least one feed line includes the feed line through which the process fluid stored in the buffer tank is supplied.

3. The magnetic refrigeration system according to claim 1 or 2, wherein
in the working vessel of the magnetic refrigerator, the magnetic working material and the process fluid come into direct contact with each other and exchange heat with each other.

4. A facility comprising:
a liquefier that generates liquefied gas by cooling and liquefying gas;
a tank that stores the liquefied gas; and
the magnetic refrigeration system according to any one of claims 1 to 3, the magnetic refrigeration system including:
the feed line that is connected to the liquefier;
the cold discharge line that is connected to the tank; and
the magnetic refrigerator that cools, as the process fluid, the liquefied gas generated by the liquefier.

5. A facility comprising:
a tank that stores a liquid; and
the magnetic refrigeration system according to any one of claims 1 to 3, the magnetic refrigeration system including:
the feed line that is connected to the tank;
the cold discharge line that is connected to the tank; and
the magnetic refrigerator that cools, as the process fluid, the liquid that has flowed from the tank into the feed line.

6. A facility comprising:
a tank that stores a liquid;
a liquid supply line that is connected to the tank and through which the liquid is supplied to a storage container or to consumption equipment, wherein the storage container stores the liquid therein and the consumption equipment consumes the liquid;
a booster that is located on the liquid supply line and that increases a pressure of the liquid;
a return line that is connected to the liquid supply line at a position downstream of the booster; and
the magnetic refrigeration system according to any one of claims 1 to 3, the magnetic refrigeration system including:
the feed line that is connected to the return line:
the cold discharge line that is connected to the tank; and
the magnetic refrigerator that cools, as the process fluid, the liquid that has flowed from the return line into the feed line.
